# EUROPEAN PATENT SPECIFICATION

(11) **EP 2 068 662 B1**
(45) Date of publication and mention of the grant of the patent: **07.11.2012**
(21) Application number: 07841270.7
(22) Date of filing: 23.08.2007
(51) Int. Cl.: A23L 1/30, A23L 1/164, A23L 1/00

(54) **COLD FORMED CEREAL BAR FORTIFIED WITH OMEGA-3 FATTY ACIDS AND PROCESSES FOR MAKING SAME**
KALTGEFORMTER UND MIT OMEGA-3-FETTSÄUREN VERSTÄRKTER GETREIDERIEGEL SOWIE VERFAHREN ZU SEINER HERSTELLUNG
BARRE DE CÉRÉALES FORMÉE À FROID RENFORCÉE D'ACIDES GRAS OMÉGA-3 ET SON PROCÉDÉ DE FABRICATION

(30) Priority: 23.08.2006 US 823325 P
(43) Date of publication of application: 17.06.2009
(73) Proprietor: Kellogg Company, Battle Creek, MI 49016-3599 (US)
(72) Inventor: GARTER, Barbara, Portage, MI 49024 (US); BELLO, Anthony, Carrollton TX 75006, (US); TURPIN, Jana, Delton, MI 49046 (US)
(74) Representative: Shanks, Andrew
(86) International application number: PCT/US2007/076630
(87) International publication number: WO 2008/024906

(56) References cited:
- EP-A- 1 388 295
- EP-A- 1 616 486
- WO-A-98/37768
- WO-A-2005/122795
- JP-A- 6 169 735
- US-A1- 2002 102 330

## Description

### TECHNICAL FIELD

This invention relates generally to a process for incorporating omega-3 fatty acids into food products and, more particularly, to a method for incorporation of omega-3 fatty acids into food products that are stable for extended periods of time.

### BACKGROUND OF THE INVENTION

Long chain polyunsaturated fatty acids have been shown to be beneficial to human health. In particular, long chain polyunsaturated omega-3 fatty acids have been shown to be especially beneficial. The three that are of primary interest include: linolenic acid (18:3w-3); eicosapentaenoic acid (EPA) (20:5w-3); and docosahexaenoic acid (DHA) (22:6w-3). The health benefits associated with enhanced consumption of these omega-3 fatty acids include a lowering of serum cholesterol, reduction of blood pressure, reduction in the risk of heart disease, and a reduction in the risk of stroke. In addition, these omega-3 fatty acids are essential to normal neuronal development and their depletion has been associated with neurodegenerative diseases such as Alzheimer's disease. In the human eye and retina the ratio of DHA:EPA is 5:1 and their presence is necessary for normal eye development. The fatty acid DHA is also believed to be essential for optimal cognitive development in infants. Food fortified with DHA is often called "brain food" in Asian countries. Preliminary studies suggest that long chain polyunsaturated omega-3 fatty acids may play a role in mediating chronic inflammatory assaults and their use by individuals with mild asthma has been documented to reduce the severity of the histamine response in asthmatics.

There are two main sources of beneficial long chain polyunsaturated omega-3 fatty acids. Plants provide an abundant source of linolenic acid. Marine animals, such as fish, and marine plants, such as micro algae, provide the main source of EPA and DHA. In particular, fatty fish such as mackerel and salmon contain high levels of EPA and DHA. Marine micro algae contain predominantly DNA. Marine micro algae have an advantage as a source of DHA in that large volumes can be rapidly produced using modem methods and there is no need for the extensive acreage associated with fish farms or the difficulty of fishing. The omega-3 fatty acids are generally found in the form of triglycerides, i.e. one or more of the fatty acids connected to the glycerol backbone is an omega-3 fatty acid, and not in the form of free fatty acids. Both forms have the health benefits and the problems of oxidative instability. Therefore in this specification and the associated claims no distinction will be made between these two forms of omega-3 fatty acids. In this specification and the claims the term omega-3 fatty acid refers to both the free fatty acid form and the triglyceride form unless specifically noted otherwise.

The beneficial effects of the omega-3 fatty acids, especially EPA and DHA, require relatively large amounts of the omega-3 fatty acids making it impractical to obtain the recommended daily amount merely by consuming fish. Thus, both have been made available in caplet form. Consumers do not generally enjoy consuming the caplets in part because they are large and also because the caplets can develop a fishy rancid type odor rapidly. Prior attempts to add DHA and/or EPA directly to shelf stable longer shelf life foods have been unsuccessful because they are very unstable and rapidly give rise to a fishy odor and taste upon oxidation, there by making the food unpalatable. It is believed that DHA and EPA are particularly unstable in the presence of water and heat, therefore their use in foods has been complicated and largely unsuccessful.
International Patent Application Publication No. WO 2005/122795 discloses a method for applying an oil mixture containing marine oils to food products in a manner that permits the marine oils to remain stable for extended periods of time. The marine oils of particular interest include the omega-3 fatty acids eicosapentaenoic acid (EPA) (20:5w-3) and docosahexaenoic acid (DHA) (22:6w-3).

It is desirable to provide a method for incorporation of omega-3 fatty acids into foods wherein the omega-3 fatty acid would be stable over an extended storage period, particularly wherein the omega-3 fatty acids comprise EPA, DHA or mixtures thereof.

### SUMMARY OF THE INVENTION

In general terms, this invention provides a cold formed bar comprising an omega-3 fatty acid powder and a carrier oil. The bar is preferably enrobed in a compound coating and has a water activity of from 0.45 to 0.57.

These and other features and advantages of this invention will become more apparent to those skilled in the art from the detailed description of a preferred embodiment.

### DETAILED DESCRIPTION OF A PREFERRED EMBODIMENT

As discussed above marine animals and marine plants are the main sources of EPA and DHA fatty acids. The use of fish oils as a source of EPA and DHA is well known. Recently, a number of manufactures have developed processes for growing marine micro algae with high efficiency. These micro algae are a great source of EPA and DHA at very high yields in a completely renewable process. Such micro algae derived EPA and DHA are available from a number of sources. One source of micro algae derived EPA and DHA is Martek Biosciences Corporation, Columbia, MD, USA. A second source of micro algae derived EPA and DHA is Nutrinova Nutrition Specialties and Food Ingredients, DE. Preferably, the omega-3 fatty acids are provided as a free flowing powder for the present invention. Typically, the fatty acids are encapsulated with a carbohydrate or protein matrix. The fatty acids are also provided as free flowing powders. One such powder is designated as Martek DHA™ powder KS35 by Martek Biosciences Corp. In the examples disclosed in the present application this Martek powder was used; however, other powdered sources of DHA and EPA are expected to be equally useful in practicing the present invention. The Martek powder used had very little EPA, however, this is a design choice and one of ordinary skill in the art can mix and match sources to produce any desired combination of DHA and EPA for a particular use. In some cases only DHA or EPA is desired in other uses a combination of the two may be desired. The omega-3 fatty acids are available as either the free fatty acids or in the triglyceride form. Generally, the triglyceride form is more stable and in the present specification and claims there will be no distinction made between whether the fatty acids are in the free form or as part of a triglyceride. All of the omega-3 fatty acids used, however, are in the powder form as described above.

The present invention is directed toward a method for formation of a cold formed bar. These bars are also known as energy bars, granola bars or trail mix bars and are popular with a wide variety of consumers. Typically they are formed by mixing the dry ingredients together and then binding them to each other in a mass using a binder syrup. The mass is then cold formed into a desired shape. Forming can be done by hand, using a series of compression rollers to form a slab, or using a cold forming extruder. Cold forming does not require that any of the forming surfaces actually be chilled, rather it refers to a forming method that does not require the addition of heat to the forming system. These systems operate at temperatures of 319 K (115° F) or less. One difficulty with past cold formed bars is their tendency to become hard and brittle over storage because of the high sugar levels found in the binder systems. The present invention is also directed toward addressing this issue. Some consumers also prefer these bars be enrobed in compound coating to add additional tastes and flavors to the bar. Typically, the compound coatings are yogurt-based, chocolate-based, or have a flavoring such as peanut butter.

A series of shortenings or oils had previously been tried in an attempt to determine if the shortening or oil influenced the storage stability of foods that incorporated omega-3 fatty acids. During this work the inventors discovered that certain carrier oils were superior to other oils tried. Specifically these preferred carrier oils had oxidative stability indexes of at least 30 hours as measured by AOCS method CD12B-92 as known in the art and solid fat contents at 294 K (21 ° C) of at least 40. Thus, in the present invention these carrier oils are the preferred oils to use in all formulations. Examples of these oils include certain palm oils, palm oil fractions, palm kernel oils, palm kernel oil fractions, and blends thereof. Low temperature processing conditions, generally no higher than 319 K (115° F) were also found to increase the storage stability of the food products. Therefore, although the binder syrups were heated during their formation they were cooled to less than 311 K (100° F) prior to use in the present invention and more preferably they were used at room temperature. Also, maintaining the water activity of the bar in the range of from 0.45 to 0.57 was found to greatly extend the stability of the bar incorporating the omega-3 fatty acids. Finally, enrobing the bar in a compound coating was also found to help extend shelf life of the product. Preferably the bar was enrobed in a chocolate compound coating. The enrobing could include enrobing only a portion of the bar or complete enrobing of the bar. The compound coating used comprised a peanut butter containing compound coating, a chocolate containing compound coating, or a yogurt containing compound coating. Other compound coatings are also expected to be beneficial in extending shelf life. Shelf life is measured by storing the packaged products under specific conditions of temperature and relative humidity and then testing them after defined periods of time. The samples were evaluated by trained organoleptic personnel and the results recorded. The sample tastes monitored were: overall flavor intensity, overall taste, peanut butter taste, soy taste, cardboard taste, painty taste, fishy taste, protein taste. The samples were also evaluated for textures: pliability, hardness-incisors, moistness of mass, chalky mouthcoat, and other. In addition, off aromas were noted. A product is defined as stable as long as it does not develop any negative tastes or aromas as identified by trained organoleptic personnel.

A general formula for a cold formed bar with out enrobing is given in Table 1. This formula is subject to wide variation and addition of other components as know to those of skill in the art.

**TABLE 1**

| Component | % by weight of base bar |
|---|---|
| **Creamed Fat** | |
| Flavor | 0 - 1 |
| Omega-3 fatty acid powder | 1 - 4 |
| Carrier oil | 3 - 20 |
| Antioxidant | 0 - 0.1 |
| Cocoa | 0 - 5 |
| Peanut butter | 0 - 25 |
| Lecithin | 0.0 - 1 |

| **Dry Blend** | |
|---|---|
| Maltodextrins | 0 - 10 |
| Peanut flour | 0 - 20 |
| Salt | 0 - 2 |
| Vitamins and minerals | 0 - 2.5 |
| Protein | 3 - 30 |
| Cellulose | 0 - 5 |
| Flour | 0 - 10 |

| **Binder Syrup** | |
|---|---|
| Corn syrup | 5 - 10 |
| Molasses | 0 - 5 |
| High fructose corn syrup | 15 - 40 |
| Lecithin | 0.0 - 0.2 |
| Glycerin | 0 - 10 |
| Sugar | 0 - 20 |
| Crystalline fructose | 0 - 20 |

In a series of examples peanut butter flavored bars or chocolate bars were created. The formulations are given below in Table 2. In examples 1 and 3 the process was as follows: the carrier oil was heated to a temperature of from 300 to 319 K (80 to 115° F) and the creamed fat components, except for the omega-3 fatty acids, were creamed together in a mixer. Then the omega-3 fatty acid powder was added and the mixture was creamed for an additional 3 minutes at low speed to form the creamed fat. Then the dry blend components were added to the creamed fat and mixed for approximately 5 minutes. Finally, the binder syrup was added to the mixture. The binder syrup had previously been cooled to less than 300 K (80° F) and was mixed for approximately 3 minutes with the other components. The bar mass was then extruded using a typical extruder such as a Bepex cold extruder, cut to size and packaged. For example 2 the process was similar expect for the binder syrup. In example 2 the binder syrup had been heated to 375 K (215° F) and then cooled to less than 311 K (100° F) prior to use in the process. All other steps were the same as for examples I and 3. The amounts in Table 2 are expressed as % by weight of base bar, this means the bar weight prior to any enrobing. All bars were enrobed with a selected compound coating, generally at 20 to 25% by weight compound coating based on the final bar weight. The compound coatings used were typical fat and sugar based compound coatings that were flavored with peanut butter, chocolate, or yogurt powder and are known to those of ordinary skill in the art. Examples 1 and 2 were enrobed in a peanut butter based compound coating. Example 3 was enrobed in a chocolate compound coating. The water activities of the final bars fell between 0.45 and 0.57 as desired.

**TABLE 2**

| Component | Example 1, % by weight base bar | Examples 2, % by weight base bar | Example 3, % by weight base bar |
|---|---|---|---|
| **Creamed fat** | | | |
| Peanut flavor | 0.47 | 0.47 | 0.0 |
| Omega-3 fatty acid powder | 3.21 | 3.21 | 3.51 |
| Carrier oil | 6.95 | 6.94 | 5.65 |
| Antioxidant | 0.02 | 0.02 | 0.03 |
| Peanut butter | 8.84 | 8.80 | 0.0 |
| Lecithin | 0.00 | 0.15 | 0.18 |
| Flavors | 0.0 | 0.0 | 0.61 |
| Vegetable oil | 0.0 | 0.0 | 2.75 |
| Cocoa | 0.0 | 0.0 | 1.75 |
| Bittersweet chocolate | 0.0 | 0.0 | 6.58 |

| **Dry blend** | | | |
|---|---|---|---|
| Maltodextrins | 5.26 | 5.26 | 8.44 |
| Peanut flour | 18.00 | 18.00 | 0.0 |
| Salt | 0.88 | 0.88 | 0.48 |
| Vitamins and minerals | 0.57 | 0.57 | 0.06 |
| Soy protein concentrate | 6.32 | 6.32 | 10.28 |
| Whey protein hydrolysate | 4.47 | 4.47 | 13.36 |
| Cellulose | 2.30 | 2.30 | 3.08 |
| Powdered sugar | 0.00 | 0.00 | 6.25 |

| **Binder Syrup** | | | |
|---|---|---|---|
| Corn syrup | 7.08 | 6.47 | 6.46 |
| Extra light molasses | 0.33 | 0.14 | 0.00 |
| High fructose Corn syrup | 33.14 | 23.46 | 28.81 |
| Lecithin | 0.17 | 0.00 | 0.0 |
| Glycerin | 1.99 | 2.16 | 1.73 |
| Sugar | 0.00 | 2.84 | 0.0 |
| Crystalline fructose | 0.00 | 7.52 | 0.00 |

Stability of the samples was determined by trained personnel using organoleptic measures of taste and aroma. Surprisingly, the samples were stable for at least 3 months at 303 K (85° F) 50% relative humidity. The samples were also stable at 294 K (70°F) 50% relative humidity for at least 7 months. The samples were also stable at storage of 303 K (85° F) 50% relative humidity for 12 weeks followed by 294 K (70°F) 50% relative humidity for a total time of at least 7 months. The stability was evaluated as described above, none of the samples exhibited fishy aromas, tastes or off flavors over the storage period. Samples that were prepared either with a water activity of greater then 0.57 or without enrobing in a compound coating were not stable and failed in a matter of weeks after storage. These samples developed off aromas and tastes including fishy tastes and aromas.

As noted above, the omega-3 fatty acids EPA and DHA were stabilized in the creamed fat and the bar by use of a carrier oil having an oxidative stability index of at least 30 hours and a solid fat content at 294 K (21°C) of at least 40. Preferably the amount of carrier oil in the base bar ranges from 3 to 20% by weight, more preferably from 3 to 15% and most preferably from 3 to 10% by weight based on the base bar weight.

The dry blend used to form the snack bar is generally a source of carbohydrates and can include any sort of grains, cereals, ready to eat cereal pieces, rice bubbles, oat flakes, wheat flakes, nuts, nut meats, coconut, fruit pieces, dried fruit pieces and other typical granola type mixes. The components that can be used in the dry blend are well know to those of skill in the art and are selected based on the desired taste and texture of the snack bar. Many of these sources also include some protein and/or fat. It can also be desirable to include additional protein sources in the dry blend. These can include sources know to those of ordinary skill in the art including: soy protein, whey protein, whey protein isolates, albumin, and dairy sources. Preferably, the amount of protein ranges from 3 to 30% by weight based on the weight of the base bar, more preferably from 5 to 30%, and most preferably from 10 to 30% by weight.

As noted above, the powdered omega-3 fatty acids used were obtained from Martek and generally they had from 100 to 130 milligrams of DHA per gram of powder with negligible amount of EPA. The at least one omega-3 fatty acid is present in an amount of from 30 to 160 milligrams in the cold formed snack bar. If desired the EPA is generally supplied at similar levels to the DHA. It is desirable to provide approximately 30 to 160 milligrams of DHA per serving in the final food product. If other antioxidants were desired then the formulation could have added to it one or more of the known antioxidants such as: tocopherols; ascorbic acid; ascorbyl palmitate; rosemary extract; butylated hydroxytoluene (BHT); butylated hydroxyanisol (BHA); or tert-butyl-1,4-benzenediol (TBHQ); or 0.02% citric acid.

The foregoing invention has been described in accordance with the relevant legal standards, thus the description is exemplary rather than limiting in nature. Accordingly, the scope of legal protection afforded this invention can only be determined by studying the following claims.

## Claims

1. A cold formed snack bar comprising:
a carrier oil having an oxidative stability index of at least 30 hours and a solid fat content at 294K (21°C) of at least 40;
at least one omega-3 fatty acid comprising docosahexaenoic acid, eicosapentaenoic acid, or mixtures thereof; and
a water activity of from 0.45 to 0.57.

2. The cold formed snack bar of claim 1 wherein the amount of carrier oil is from 3 to 20% by weight based on the weight of the bar.

3. The cold formed snack bar of claim 1 further comprising a compound coating over at least a portion of the snack bar, said compound coating comprising at least one of yogurt, chocolate, peanut butter, or a mixture thereof.

4. The cold formed snack bar of claim 1 wherein the snack bar is stable for at least 12 weeks of storage at 303K (85°F) 50% relative humidity as defined by a lack of fishy aroma or taste over the storage period.

5. The cold formed snack bar of claim 1 wherein the snack bar is stable for at least 4 months of storage at 294K (70°F) 50% relative humidity as defined by a lack of fishy aroma or taste over the storage period.

6. The cold formed snack bar of claim 3 wherein the compound coating is present in an amount of from 20 to 25% by weight based on the total weight of the snack bar and compound coating.

7. The cold formed snack bar of claim 1 wherein the at least one omega-3 fatty acid is present in an amount of from 30 to 160 milligrams.

8. The cold formed snack bar of claim 1 further comprising protein present in an amount of from 3 to 30% by weight based on the weight of said bar.

9. A process of forming a snack bar comprising the steps of:
a) providing a carrier oil having an oxidative stability index of at least 30 hours and a solid fat content at 294K (21°C) of at least 40;
b) combining at a temperature of 319K (115°F) or less the carrier oil with a source of at least one omega-3 fatty acid comprising docosahexaenoic acid, eicosapentaenoic acid, or a mixture thereof;
c) combining at a temperature of 319K (115°F) or less the mixture from step a) with a dry blend comprising a source of carbohydrates and with a binder syrup to form a bar mass; and
d) forming the bar mass at a temperature of 319K (115°F) or less to form the snack bar, the snack bar having a water activity of from 0.45 to 0.57.

10. The process of forming a snack bar according to claim 9 wherein step a) comprises providing the carrier oil in an amount of from 3 to 20% by weight based on the total weight of the snack bar.

11. The process of forming a snack bar according to claim 9 wherein step b) comprises providing the at least one omega-3 fatty acid in an amount of from 30 to 160 milligrams.

12. The process of forming a snack bar according to claim 9 further comprising in step c) providing protein in an amount of from 3 to 30% by weight based on the total weight of the snack bar.

13. The process of forming a snack bar according to claim 9 further comprising the step of applying a compound coating to at least a portion of the snack bar, said compound coating comprising at least one of yogurt, chocolate, peanut butter, or a mixture thereof.

14. The process of forming a snack bar according to claim 9 further comprising the step of applying a compound coating to at least a portion of the snack bar in an amount of from 20 to 25% by weight based on the total weight of the snack bar and the compound coating.

15. The process of forming a snack bar according to claim 9 wherein step d) comprises forming the bar mass using at least one of a compression roller or an extruder.

## Patentansprüche

1. Kaltgeformter Imbissriegel umfassend:
ein Trägeröl, das einen oxidativen Stabilitätsindex von mindestens 30 Stunden und einen Festfettgehalt bei 294K (21 °C) von mindestens 40 aufweist;
mindestens ein Omega-3-Fett umfassend Docosahexaensäure, Eicosapentaensäure oder Mischungen davon; und
eine Wasseraktivität von 0,45 bis 0,57.

2. Kaltgeformter Imbissriegel nach Anspruch 1, wobei die Menge an Trägeröl 3 bis 20 Gew.-%, auf das Gewicht des Riegels bezogen, beträgt.

3. Kaltgeformter Imbissriegel nach Anspruch 1, des Weiteren eine Verbindungsbeschichtung über mindestens einem Teil des kaltgeformten Imbissriegels umfassend, wobei die Verbindungsbeschichtung mindestens eines von Joghurt, Schokolade, Erdnussbutter oder einer Mischung davon umfasst.

4. Kaltgeformter Imbissriegel nach Anspruch 1, wobei der Imbissriegel für eine Aufbewahrungszeit von mindestens 12 Wochen bei 303K (85 °F) und 50% relativer Feuchte beständig ist, wie durch Fehlen eines Aromas oder Geschmacks nach Fisch über die Aufbewahrungszeit definiert.

5. Kaltgeformter Imbissriegel nach Anspruch 1, wobei der Imbissriegel für eine Aufbewahrungszeit von mindestens 4 Monaten bei 294K (70 °F) und 50% relativer Feuchte beständig ist, wie durch Fehlen eines Aromas oder Geschmacks nach Fisch über die Aufbewahrungszeit definiert.

6. Kaltgeformter Imbissriegel nach Anspruch 3, wobei die Verbindungsbeschichtung in einer Menge von 20 bis 25 Gew.-%, auf das Gesamtgewicht des Imbissriegels und der Verbindungsbeschichtung bezogen, vorliegt.

7. Kaltgeformter Imbissriegel nach Anspruch 1, wobei die mindestens eine Omega-3-Fettsäure in einer Menge von 30 bis 160 Milligramm vorliegt.

8. Kaltgeformter Imbissriegel nach Anspruch 1, des Weiteren Protein umfassend, das in einer Menge von 3 bis 30 Gew.-%, auf das Gewicht des Riegels bezogen, vorliegt.

9. Verfahren zum Bilden eines Imbissriegels, umfassend die Schritte des:
a) Bereitstellens eines Trägeröls, das einen oxidativen Stabilitätsindex von mindestens 30 Stunden und einen Festfettgehalt bei 249K (21 °C) von mindestens 40 aufweist;
b) Kombinierens bei einer Temperatur von 319K (115 °Cf) oder weniger des Trägeröls mit einer Quelle von mindestens einer Omega-3-Fettsäure umfassend Docosahexaensäure, Eicosapentaensäure oder eine Mischung davon;
c) Kombinierens bei einer Temperatur von 319K (115 °F) oder weniger der Mischung aus Schritt a) mit einer trockenen Abmischung umfassend eine Quelle von Kohlehydraten und mit einem bindenden Sirup unter Bildung einer Riegelmasse; und
d) Formens der Riegelmasse bei einer Temperatur von 319K (115 °F) oder weniger unter Bildung des Imbissriegels, wobei der Imbissriegel eine Wasseraktivität von 0,45 bis 0,57 aufweist.

10. Verfahren zum Bilden eines Imbissriegels nach Anspruch 9, wobei der Schritt a) das Bereitstellen des Trägeröls in einer Menge von 3 bis 20 Gew.-%, auf das Gesamtgewicht des Imbissriegels bezogen, umfasst.

11. Verfahren zum Bilden eines Imbissriegels nach Anspruch 9, wobei der Schritt b) das Bereitstellen der mindestens einen Omega-3-Fettsäure in einer Menge von 30 bis 160 Milligramm umfasst.

12. Verfahren zum Bilden eines Imbissriegels nach Anspruch 9, des Weiteren in Schritt c) das Bereitstellen von Protein in einer Menge von 3 bis 30 Gew.-%, auf das Gesamtgewicht des Imbissriegels bezogen, umfassend.

13. Verfahren zum Bilden eines Imbissriegels nach Anspruch 9, des Weiteren den Schritt des Aufbringens einer Verbindungsbeschichtung auf mindestens einen Teil des Imbissriegels umfassend, wobei die Verbindungsbeschichtung mindestens eines von Joghurt, Schokolade, Erdnussbutter oder einer Mischung davon umfasst.

14. Verfahren zum Bilden eines Imbissriegels nach Anspruch 9, des Weiteren den Schritt des Aufbringens einer Verbindungsbeschichtung auf mindestens einen Teil des Imbissriegels in einer Menge von 20 bis 25 Gew.-%, auf das Gesamtgewicht des Imbissriegels und der Verbindungsbeschichtung bezogen, umfassend.

15. Verfahren zum Bilden eines Imbissriegels nach Anspruch 9, wobei der Schritt d) das Formen der Riegelmasse unter Anwendung mindestens einer Kompressionswalze oder eines Extruders umfasst.

## Revendications

1. Barre nutritive formée à froid comprenant :
une huile formant support ayant un indice de stabilité à l'oxydation d'au moins 30 heures et une teneur en matières grasses solides à 294 °K (21 °C) d'au moins 40 ;
au moins un acide gras oméga-3 comprenant l'acide docosahexaénoïque, l'acide eicosapentaénoïque ou leurs mélanges ; et
une activité aqueuse de 0,45 à 0,57.

2. Barre nutritive formée à froid selon la revendication 1, dans laquelle la teneur de l'huile formant support est de 3 à 20 % en poids basé sur le poids de la barre.

3. Barre nutritive formée à froid selon la revendication 1, comprenant en outre un enrobage de composé par-dessus au moins une portion de la barre nutritive, ledit enrobage de composé comprenant au moins l'un parmi le yaourt, le chocolat, le beurre d'arachide ou un de leurs mélanges.

4. Barre nutritive formée à froid selon la revendication 1, dans laquelle la barre nutritive est stable durant au moins 12 semaines de stockage à 303 °K (85 °F) sous une humidité relative de 50%, tel que défini par une absence d'arôme ou de goût de poisson sur la période de stockage.

5. Barre nutritive formée à froid selon la revendication 1, dans laquelle la barre nutritive est stable durant au moins 4 mois de stockage à 294 °K (70 °F) sous une humidité relative de 50 %, tel que défini par une absence d'arôme ou de goût de poisson durant la période de stockage.

6. Barre nutritive formée à froid selon la revendication 3, dans laquelle l'enrobage de composé est présent en une quantité de 20 à 25 % en poids basé sur le poids total de la barre nutritive et de l'enrobage de composé.

7. Barre nutritive formée à froid selon la revendication 1, dans laquelle le au moins un acide gras de type oméga-3 est présent en une quantité de 30 à 160 milligrammes.

8. Barre nutritive formée à froid selon la revendication 1, comprenant en outre une protéine présente en une quantité de 3 à 30 % en poids basé sur le poids de ladite barre.

9. Procédé de formation d'une barre nutritive comprenant les étapes de :
a) fourniture d'une huile formant support ayant un indice de stabilité à l'oxydation d'au moins 30 heures et une teneur en matière grasse solide à 294 °K (21 °C) d'au moins 40 ;
b) combinaison à une température de 319 °K (115 °F) ou moins, de l'huile formant support avec une source d'au moins un acide gras de type oméga-3 comprenant l'acide docosahexaénoïque, l'acide eicosapentaénoïque, ou un de leurs mélanges ;
c) combinaison à une température de 319 °K (115°F) ou moins, du mélange de l'étape a) avec un mélange sec comprenant une source d'hydrates de carbone et avec un sirop liant pour former une masse pour barre ; et
d) mise en forme de la masse pour barre à une température de 319 °K (115 °F) ou moins pour former la barre nutritive, la barre nutritive ayant une activité aqueuse de 0,45 à 0,57.

10. Procédé de formation d'une barre nutritive selon la revendication 9, dans lequel l'étape a) comprend la fourniture de l'huile formant support en une quantité de 3 à 20 % en poids sur la base du poids total de la barre nutritive.

11. Procédé de formation d'une barre nutritive selon la revendication 9, dans lequel l'étape b) comprend la fourniture du au moins un acide gras de type oméga-3 en une quantité de 30 à 160 milligrammes.

12. Procédé de formation d'une barre nutritive selon la revendication 9, comprenant en outre dans l'étape c) la fourniture de la protéine en une quantité de 3 à 30 % en poids sur la base du poids total de la barre nutritive.

13. Procédé de formation d'une barre nutritive selon la revendication 9, comprenant en outre l'étape d'application d'un enrobage de composé à au moins une partie de la barre nutritive, ledit enrobage de composé comprenant au moins l'un parmi le yaourt, le chocolat, le beurre d'arachide, ou un mélange d'entre eux.

14. Procédé de formation d'une barre nutritive selon la revendication 9, comprenant en outre l'étape d'application d'un enrobage de composé à au moins une partie de la barre nutritive en une quantité de 20 à 25 % en poids basé sur le poids total de la barre nutritive et de l'enrobage de composé.

15. Procédé de formation d'une barre nutritive selon la revendication 9, dans lequel l'étape d) comprend la formation de la masse pour barre en utilisant au moins l'un parmi un cylindre de compression ou une extrudeuse.
